# EUROPÄISCHE PATENTSCHRIFT

(11) **EP 2 307 333 B1**
(45) Veröffentlichungstag und Bekanntmachung des Hinweises auf die Patenterteilung: **10.09.2014**
(21) Anmeldenummer: 09775937.7
(22) Anmeldetag: 06.07.2009
(51) Int. Cl.: C05D 9/00, C05G 3/00, A01G 31/00

(54) **MATERIALVERBUND AUS POLYMERMATERIALIEN UND EINER PORÖSEN, MINERALISCHEN MATRIX SOWIE DEREN HERSTELLUNG UND ANWENDUNG**
COMPOSITE MATERIAL COMPOSED OF POLYMER MATERIALS AND A POROUS MINERAL MATRIX AND THE PRODUCTION THEREOF AND USE
MATÉRIAU COMPOSITE À BASE DE MATIÈRES POLYMÈRES ET D'UNE MATRICE MINÉRALE, POREUSE, AINSI QUE SA FABRICATION ET SON UTILISATION

(30) Priorität: 07.07.2008 DE 102008032033
(43) Veröffentlichungstag der Anmeldung: 13.04.2011
(73) Patentinhaber: Inotek Glienke & Glienke GbR, 13599 Berlin (DE)
(72) Erfinder: GLIENKE, Peter, O., 10557 Berlin (DE)
(74) Vertreter: Limbeck, Achim
(86) Internationale Anmeldenummer: PCT/DE2009/000943
(87) Internationale Veröffentlichungsnummer: WO 2010/003399

(56) Entgegenhaltungen:
- WO-A-94/00004
- WO-A-2005/005566
- WO-A-2005/066327
- WO-A-2005/120221
- US-A- 5 300 246
- US-A- 6 084 011
- US-A1- 2003 082 396

## Beschreibung

### Technisches Gebiet

Die vorliegende Erfindung betrifft einen Materialverbund, insbesondere als Formkörper ausgebildeter und/oder zur Herstellung von Formkörpern geeigneter Materialverbund, bestehend aus Polymermaterialien und einer porösen mineralischen Matrix, der durch Einwirkung von Flüssigkeiten, insbesondere durch wässrige Flüssigkeiten und/oder wässrige Ölemulsionen expandiert und diese Flüssigkeiten speichert.

Darüber hinaus umfasst die Erfindung vielfältige Ausführungsformen und Zusammensetzungen, die es erlauben, für spezielle Anwendungsbereiche jeweils entsprechende Kombinationen des erfindungsgemäßen Materialverbunds (Hydrogel-Komposit) herzustellen und anzuwenden. Des Weiteren betrifft die Erfindung ein Verfahren zur Herstellung des erfindungsgemäßen Materialverbunds sowie deren bevorzugte Anwendungsbereiche.

### Stand der Technik

Es ist bekannt, dass vernetzte Polyacrylsäuren und/oder Copolymere auf der Basis von Polyacrylsäure und Polyacrylamid, in der einschlägigen Fachliteratur unter dem Oberbegriff der Polyacrylat und Poylyarylamid basierten Superabsporbern beschrieben, insbesondere in ihrer Salzform, in der Lage sind, ein vielfaches ihres Eigengewichtes an Wasser, wässrigen Flüssigkeiten und auch Öl-Wasser-Dispersionen und/oder Suspensionen aufzunehmen und, unter Ausbildung von Hydrogelen, zu binden. Polyacrylsäure ist eine farblose Substanz, die sich gut in Wasser löst. Die Glasübergangstemperatur liegt bei >100°C. Oberhalb von 200°C bis 250°C verliert das Polymer Wasser, wobei unlösliche vernetzte Anhydride entstehen. Ab ca. 350°C kommt es zur Zersetzung zu Kohlendioxid und Kohlenwasserstoffen.

Für die Herstellung von Polyacrylsäure können verschiedene Verfahren genutzt werden, meist die Lösungspolymerisation in Wasser, die Fällungs- oder die Emulsionspolymerisation, aber auch die Hydrolyse von Acrylsäure-Derivaten (Ester, Nitrile, Amide) hat eine größere Bedeutung erlangt. Ein besonders großes Eigenschaftsspektrum ist durch Copolymerisation mit anderen Comonomeren möglich. Polyacrylsäure wird als Handelsprodukt in der Säure- oder Salzform angeboten.

Vernetzte oder teilvernetzte Polyacrylsäuren als Kalium- oder Natriumsalz der Polyacrylsäure werden vorzugsweise als extrem Flüssigkeit aufsaugender, so genannte superabsorbierende Polymere (nachstehend als SAP oder Superabsorber bezeichnet) eingesetzt, beispielsweise in Babywindeln oder Damenbinden. Weitere Anwendungen liegen in der Verpackung feuchtigkeitsempfindlicher oder Flüssigkeit absondernder Lebensmittel oder als Gel-Bildner in der Arzneimittelherstellung. Das SAP liegt für alle genannten Verwendungen in vernetzter und/oder teilvernetzter Form vor. Die Vernetzung ist notwendig, um die Unlöslichkeit des SAP in Wasser zu gewährleisten. Die Lücken und Hohlräume des Netzwerkes werden durch Wasser ausgefüllt. Dadurch entsteht ein Hydrogel.

Superabsorber können ein Vielfaches ihres Eigengewichtes an Wasser absorbieren, wobei sie zu einem Hydrogel aufquellen. Polymerketten, vor allem von Polyacrylsäure, werden durch vereinzelte kovalente Bindungen untereinander verknüpft. Diese leichte Vernetzung ist notwendig, um die Unlöslichkeit des SAP in Wasser zu gewährleisten. Hydrogel ist ein in Wasser oder in wässrigen Flüssigkeiten gequollenes, hydrophiles polymeres Netzwerk. Die Eigenschaften dieser Gele sind abhängig von der Wechselwirkung zwischen Netzwerk und der umgebenden Flüssigkeit. In ionischen Gelen muss der osmotische Beitrag der ionischen Gruppen berücksichtigt werden, der großen Einfluss auf die Quelleigenschaften der Gele hat.

Zum Beispiel sind in einem Polyacrylsäure-Gel die Acrylsäure-Gruppen in unmittelbarer Nachbarschaft zueinander angeordnet. Die gleichen Ladungen der dissoziierten Carboxylat-Gruppen stoßen sich ab, die polymeren Ketten strecken sich und das Gel quillt in extremer Weise an. Solche Netzwerke können bis zu 1000gr Wasser pro 1gr Polymer aufnehmen. Aufgrund dieser Produkteigenschaften werden vernetzte Polyacrylsäuren als Superabsorber bezeichnet.

Es war nun nahe liegend, das Wasserbindevermögen der SAP dazu zu nutzen, dass diese als Wasserspeicher bei trockenen Böden zum Einsatz kommen, insbesondere dann, wenn es darum geht, in heißen Klimazonen den Wasserhaushalt zu regulieren und sicherzustellen, dass das für das Pflanzenwachstum erforderliche Wasser nicht schnell verdunstet und über einen längeren Zeitraum gebunden ist und an die Pflanzen abgegeben werden kann.

Hier sind in der einschlägigen Fach- und Patentliteratur vielfältige Anwendungsbeispiele und Studien, gerade in den letzten zehn Jahren, veröffentlicht worden. Grundsätzlich wird immer empfohlen, dass SAP mittels geeigneten mechanischen Vorrichtungen in die Bodenstruktur eingearbeitet wird.

Nachteilig ist allerdings, da SAP zum Verkleben neigen und selbst keine Pflanzerdestruktur aufweisen, dass damit zum Beispiel bei Anwendung in Wüstengebieten zwar Wasser in den Wüstensandböden gebunden wird aber keine Struktur gegeben ist bzw. erzielt wird, die ein erfolgreiches Bepflanzen ermöglicht.

Bedingt und mit ausreichender Wirkung können SAP nur dann angewendet werden, wenn diese bereits in Bodensubstraten eingearbeitet sind, deren Struktur zur Bepflanzung mit Nutzpflanzen geeignet ist. Hinzu kommt, dass SAP das gebundene Wasser zum Teil nur sehr schwer abgeben und damit für das Pflanzenwachstum nicht, wie gewünscht, zur Verfügung stehen. Ferner sind zur Erzielung eines Effektes relativ große Beimengen von SAP erforderlich, ihre Verwendung mithin sehr kostenintensiv.

Aufgrund dieser Nachteile hat sich die Anwendung von SAP auf der Basis von Acrylsäurenpolymeren und anderen Polymeren in diesem Bereich bisher nicht durchsetzen können.

In neuerer Zeit wurden Produkte bekannt, die hier Abhilfe schaffen sollen. Bei diesen Produkten werden zum Beispiel in das Polymerisat feine Lavamehle eingebracht und in das Polymerisat eingebundenen.

Solche SAP, deren Herstellung und Anwendungsbereiche werden beispielsweise in WO2003000621 A1, in der EP 1879932 B1 und in der DE202007016362U1 beschrieben. Die Anwendung solcher mit Lavagesteinsmehl oder ähnlicher, poröser Gesteine und/oder Gesteinsmehl und/oder pflanzlichen Beimischungen bereits bei der Polymerisation befüllten SAP bringen zwar Verbesserungen in der Anwendung aber es sind meist schwammartige, grobkörnige Granulate, die an der Oberfläche klebrig sind und unter Druckeinwirkung zusammenbacken können. Diese Granulate erinnern in ihrer Konsistenz an poröses Gummigranulat. Die Herstellung von Feingranulaten, die eine erdenähnliche Struktur aufweisen, sind mit diesem Verfahren nicht möglich.

Diese Produkte sind zudem durch den aufwändigen Herstellungsprozess sehr teuer. Damit ist deren Einsatz in Trocken- und Wüstengebieten nur mit sehr großem Kostenaufwand möglich und damit wirtschaftlich uninteressant.

Weitere gravierende Nachteile sind beim Einsatz solcher SAP dadurch gegeben, dass beim Verdunsten des Wassers aus diesen SAP das so genannte Bodenverbesserungsmittel steinhart wird und die sich nach Wasserentzug bildende Form im Aussehen und in seiner Härte an Kieselsteine erinnert und damit keinesfalls dazu beiträgt, insbesondere bei der Anwendung im Oberflächenbereich, die Bodenstruktur zu verbessern. Es besteht die Gefahr, dass zarte Pflanzenkeimlinge erdrückt werden.

In der EP0647093B1 wird vorgeschlagen, dass der Matrix aus porösem geschäumtem hydrophilen und wasserhaltenden Hydrogelmaterial, das offene Zellen ausweist, als poröses expandiertes Mineral, Perlit oder Vermiculit zugesetzt wird. Die daraus resultierenden porösen, schwammartigen Gebilde eignen sich zwar als Trägermaterial mit Wasserspeichereffekt für die Vermehrung von Pflanzen, aber nicht als Bodenverbesserungsprodukt mit Langzeit-Wasserspeicher-Effekt. Darüber hinaus dient das expandierte Perlit, das nicht in Form von expandierten, gebrochenen und/oder gemahlenem Perlitkugeln vorliegt, sondern in der unregelmäßiger Kugelform als Wasser speichernder Füllstoff und nicht als Matrix für das wasserhaltende Hydrogel-Plastmaterial. Dies gilt auch für den vorgeschlagenen expandierten Füllstoff Vermiculit.

WO 94/00004 A offenbart einen Materialverbund, bestehend aus porösen, expandierten Granulaten aus mineralischen Stoffen, die verbunden werden mit einem offenzelligen Wasser speichernden Plastikmaterial als Matrix. Es wird darauf abgehoben, dass das expandierte Mineral in Granulatform vorliegt und zwar vorzugsweise in einer Größe von 0,2 bis 1,5 mm, und dass dieses geblähte Material geblähtes Perlit oder Vermiculit sein muss. Das Plastikmaterial soll dabei vorzugsweise aus einem hydrophilen Wasser speichernden Polyurethan bestehen.

WO 2005/120221 offenbart Kompositmaterialen, die unter anderem Superabsorber-Polymere enthalten können und andere mineralische und organische Zuschlagstoffe. Die in WO 2005/066327 A offenbarten Kompositmaterialen finden Verwendung als Tiereinstreu, bei dem expandiertes Perlit verwendet wird, wobei geblähtes Perlit in der üblichen offenporigen Beschaffenheit und in der typischen Perlform gemeint ist, was sich allerdings als Bodenverbesserungsmittel mit Langzeit-Wasserspeicher-Effekt nicht eignet.

WO 2005/066327 A beschreibt eine Vorrichtung und Methode zur Behandlung von biologischen Materialien und deren Lagerung. Zur Aufnahme von Flüssigkeiten wird vorgeschlagen, neben anderen Materialien, expandiertes, also geblähtes Perlit zu verwenden.

WO 2005/005566 A offenbart vielfältige Ausführungsformen von hydrophilen Kompositen und Mischung und deren Anwendungen. Diese Druckschrift legt die Verwendung für den Einsatz und die Zusammensetzung vieler Stoffe offen, allerdings nicht die Verbindung in den Material-Kompositionen, die die Verwendung von SAP in Kombination mit Perlitpartikel beinhalten.

US 2003/0082396A1 beschreibt ein dünnes flexibles Kompositmaterial welches magnetisch oder magnetisierbar ist. Hier wird der Einsatz von SAP mit Vermiculit und geblähtem Perlit empfohlen.

US Patent 6,084,011 offenbart Zementmischungen, Zementpasten und deren Produktionsmethoden unter Beimischung von "wasserlöslichen Polymeren", wobei der Zusatz von "water- soluble poymer" ausführlich beansprucht wird. Es handelt sich hierbei mithin um Zement-Komposite, denen wasserlösliche Polymere und/oder Copolymere in fester und/oder flüssiger Form zugesetzt werden, also keine SAP.

US Patent 5,300,246 offenbart unter anderem eine Salzwasser absorbierende Materialmischung und ein Behältnis / eine Verpackung, vornehmlich zur Frischhaltung und Lagerung von Fisch, Muscheln, Fleisch und Gemüse u.a. Lebensmittel, bei denen Wasser austreten kann unter Verwendung von Wasser absorbierenden Harzen in Pulver und/oder Granulatform auch in Kombination mit Wasser absorbierenden "Kermikmaterialien".

### Darstellung der Erfindung

Die Erfindung hat es sich zur Aufgabe gemacht, einen Materialverbund zu schaffen, der preiswert herzustellen ist und die aufgezeigten Nachteile ausräumt. Idealerweise sollte ein solcher Materialverbund unter Nutzung der wasserspeichernden Eigenschaften der SAP, unter Einwirkung von Wasser und/oder Flüssigkeiten expandieren und unter Bindung des Wassers ein fertiges bepflanzbares Bodensubstrat bilden, oder bei Untermengung in nicht bepflanzbare Bodenstrukturen diese so umformen und auflockern, dass sie nach Einarbeiten dieses Materialverbundes und anschließender Beregnung sich zu einem bepflanzbaren Bodensubstrat umformt, das über ein das Pflanzenwachstum förderndes Wasserspeichervermögen verfügt und in der Lage ist, ein Vielfaches des Eigengewichtes an Wasser zu binden und dieses aber auch wieder an die Pflanzen oder das Saatgut abzugeben.

Die Lösung der erfindungsgemäßen Aufgabe ergibt sich aus den Merkmalen des kennzeichnenden Teils des Anspruchs 1. Vorteilhafte Weiterbildung der Erfindung und des Verfahrens zur Herstellung des erfindungsgemäßen Materialverbunds sowie deren Verwendung ergeben sich aus den Unteransprüchen.

Danach ist ein Materialverbund der eingangs genannten Art dadurch gekennzeichnet, dass gebrochenes und/oder gemahlenes, offenporiges, geblähtes, expandiertes Perlit in Form von scharfkantigen, porösen Perlitpartikeln und mindestens ein Hydrogel bildendes natürliches und/oder synthetisches, vernetztes und/oder teilvernetztes Polymer und/oder Copolymer enthalten ist, wobei mindestens ein Polymer und/oder Copolymer durch Wasseraufnahme teilweise, vorzugsweise zu 10-60% bezogen auf das eingebrachte Polymergewicht und/oder Polymervolumen, als Hydrogel ausgebildet ist und/oder vollständig in Hydrogelform vorliegt.

Perlit bezeichnet vorliegend ein alteriertes (chemisch und physikalisch umgewandeltes) vulkanisches Glas (Obsidian) und zählt damit zu den Gesteinen. Es handelt sich hierbei um ein Aluminiumsilikat mit einem Anteil von mehr als 70% Siliciumdioxid. Besonders charakteristisch ist für das Rohperlit, dass in diesem Wasser eingeschlossen ist und zwar zwischen 2-5% in seiner Gesamtmasse. Wird das zerkleinerte und vorgetrocknete Gestein, also der Rohperlit, Temperaturen um 1000°C ausgesetzt, so expandiert das Material und es entsteht ein sehr leichtes und poröses, offenporiges Granulat aus zellulären kugelförmigen Partikeln, das als geblähtes Perlit oder "industriell" expandiertes Perlit bezeichnet wird. Es ist erfindungsgemäß aber auch durchaus vorteilhaft, "natürlich" expandiertes Perlit zu verwenden. Je nach Gehalt und eingeschlossenem Kristallwasser im Perlitgestein, also dem Rohperlit, expandiert dieses um das 15-20fache seines ursprünglichen Volumens auf. Die Schüttdichten liegen je nach Körnung, zwischen vierzig bis hundert Kilogramm pro Kubikmeter.

Haupteinsatzgebiet für geblähtes Perlit sind Anwendungen in der Wärmedämmung, Kerndämmung, sowie als Füll- und Zuschlagstoff in der Bauindustrie. Darüber hinaus wird geblähtes Perlit im Garten- und Landschaftsbau, sowie als Zusatz zu Pflanzsubstraten eingesetzt.

Geblähtes Perlit mit einer Korngröße zwischen 2-6mm hat ein Porenvolumen von über 90 Volumenprozent und eine Wasserspeicherkapazität von mehr als 50 Volumenprozent. Als leichtes, hochporöses und chemisch innertes Substrat dient geblähtes Perlit beim Anbau von Gemüse und Schnittblumen als Ersatz für Boden- oder Torfsubstrat. Dabei werden die Pflanzen in geblähtem Perlit kultiviert und können so kontrolliert mit Wasser und Nährstoffen versorgt werden. Gemahlenes oder gebrochenes Perlit wird außerdem als Filterhilfsmittel eingesetzt und zwar klassifiziert nach Partikelgrößen, die auf den zu erreichenden Filtereffekt abgestimmt sind.

Bei der gesamten Prozesstechnologie zum Blähen von Perlitgesteinen, beginnend beim Zerkleinern und Klassifizieren des Rohperlits auf die entsprechenden Korngrößen, fällt in den Filtereinrichtungen zunächst ungeblähter Perlitstaub an und auch bei den verschiedenen Bläh-, Mahl- und Brechprozessen bei der Aufbereitung von geblähtem Perlit, fallen recht große Mengen von unklassifizierten Perlitpartikel an, deren Partikelgröße die Bandbreite von null bis maximal einhundert Mikrometer abdeckt aber im Mittel bei fünfzig Mikrometer liegt und die eine flockige, unregelmäßige, zerklüftete Struktur ausweisen. Die Schüttdichten dieser Perlitpartikel liegen zwischen 50 bis 100gr pro Liter, die von ungeblähtem Perlitstaub und/oder Perlitpulver zwischen 650 bis 850gr pro Liter, abhängig von der Partikelgröße und -Verteilung. Für diese Abfallstoffe, Perlitstaub und geblähte Feinstpartikel aus Perlit, gibt es praktisch keine nennenswerte Einsatz- und Anwendungsbereiche.

Es wurde nun überraschend herausgefunden, dass die offenporigen, geblähten Partikel zum Aufbau der erfindungsgemäßen Materialverbunde bestens geeignet sind und auch der Abfallstoff ungeblähter Perlitstaub als beschwerender Zuschlagstoff eingesetzt werden kann.

Die geblähten Perlitpartikel und der ungeblähte Perlitstaub sind preisgünstig und damit bestens geeignet zur kostengünstigen Herstellung der erfindungsgemäßen Materialverbunde und Formkörper.

Hervorzuheben ist zudem, dass auch diese offenporigen, geblähten Perlitpartikel in der Lage sind, mehr als 50 Volumenprozent an Wasser aufzunehmen und einzulagern. Hinzu kommt überraschender Weise, dass bereits durch Mischen der geblähten Perlitpartikel, mit den kristallinen SAP, wie beispielsweise mit hygroskopischem Kaliumpolyacrylat, frei fließende und nicht verklebende Materialverbunde resultieren. Bereits durch die Einwirkung von Luftfeuchtigkeit und/oder Zugabe von geringen Mengen an Wasser, wird eine Bindung und Fixierung der Polyacrylatpartikel an die Perlitpartikel erreicht.

### Ausführung der Erfindung

Weitere Ziele, Merkmale, Vorteile und Anwendungsmöglichkeiten der ergeben sich aus der nachfolgenden Beschreibung von Ausführungsbeispielen. Dabei bilden alle beschriebenen Merkmale für sich oder in beliebiger Kombination den Gegenstand der Erfindung, unabhängig von der Zusammenfassung in einzelnen Ansprüchen oder deren Rückbeziehung.

Die nachfolgenden Beispiele und die Lehre der Erfindung verwenden in dieser Schrift - der besseren Verständlichkeit wegen - wenn nicht gesondert gekennzeichnet, ein Hydrogel bildendes SAP auf Kalium-Polyacrylat-Basis (speziell Luquasorb 1280 RS der Firma BASF).

| Luquasorb 1280 RS ist gemäß Zeichnung-V130807 (BASF) definiert: | |
|---|---|
| Art des Polymers | Potassium Polyacrylate |
| Erscheinungsform | Granulat |
| Aufnahmevermögen /g/g) | 26 |
| NaCl 0,9% | |
| pH (at 5 g/l NaCl 0,9%) | 5,5 - 6,5 |
| Spezifisches Gewicht (g/ml) | ca. 0,6 |
| Vortex Test (sec) | <20 |
| Restmonomeren (ppm) | <400 |
| Teilchengröße-Verteilung (%) | >850 µm <0,1 |
| | 500 - 850 µm 1 |
| | 300 - 500 µm 41 |
| | 150 - 300 µm 43 |
| | 45 - 150 µm 15 |
| | <45 µm 0,2 |

Beispiel 1: In einem ersten Ausführungsbeispiel der Erfindung wurden 80kg geblähte, offenporige Perlitpartikel mit einer Partikelgröße im Mittel <50µm in einem Zwangsmischer vorgelegt. Bei einer Temperatur von 20°C wurden 20kg SAP eingetragen und homogen untergemischt. Nach einer Mischzeit von ca. 10min resultierte ein frei fließender, homogener Materialverbund, der sich mittels geeigneter Vorrichtungen, wie beispielsweise Flachmatrizenpressen, Ringmatrizenpressen, Tablettenpressen oder anderen Presstechnologien verdichten und zu Formkörpern, vorzugsweise in Form von Pellets und Tabletten umformen lässt.

Das Beispiel 1 zeigt einen typischen erfindungsgemäßen Materialverbund, nämlich ein Hyrogel-Komposit, das sich sowohl als Bodenverbesserungsmittel mit Wasserspeichereigenschaften und als Zusatz zu Erdsubstraten hervorragend einsetzen lässt. Dieser Materialverbund ist in der Lage, unter Volumenvergrößerung bis zum 40fachen des Eigengewichtes Wasser aufzunehmen und dieses zu speichern und wieder abzugeben. Nach Abgabe des gebundenen Wassers, also nach Aufhebung des Hydrogelzustandes durch Verdunsten des aufgenommenen Wassers und/oder die Abgabe des Wassers, beispielsweise an Pflanzen, ist der Materialverbund in der Lage, wieder Wasser aufzunehmen, zu speichern und abzugeben.

Anstelle des im Beispiel 1 eingesetzten Kalium-Polyacrylat-Polymers können zum Aufbau des Materialverbundes - wie ausgeführt - auch andere Hydrogel bildende Polymere und/oder Copolymere verwendet werden. Dadurch ist es möglich, für spezifische Anwendungen maßgeschneiderte Materialverbunde herzustellen. Die Auswahl der Hydrogel bildenden Polymere und/oder Copolymere ist abhängig von den angestrebten Produkteigenschaften und Anwendungsbereichen.

Dies gilt ferner auch unter Verweis auf die Unteransprüche für den Anteil der im erfindungsgemäßen Hydrogel-Komposit enthaltenen Hydrogel bildenden SAP und den Anteil an offenporigen, geblähten Perlitpartikeln.

Die nach Beispiel 1 zusammengesetzten Materialverbunde weisen bereits eine starke Bindung der eingelagerten SAP-Polyacrylate aus. Es wurde aber herausgefunden, dass durch Zugabe und die dadurch erfolgte vollständige und/oder teilweise Überführung der SAP-Polyacrylate die Bindung dieser SAP an und in den geblähten Perlitpartikeln entscheidend verbessert wird.

Durch anschließende Trocknung der so zusammengesetzten und hergestellten Materialverbunde wird diese Bindung nicht aufgehoben, sondern noch verbessert. Diese fortführenden Weiterbildungen der Erfindung werden nachstehend in den Beispielen 2, 3 und 4, beispielsweise unter Einbeziehung von Herstellung und Anwendung, beschrieben.

Beispiel 2: In einem Fluidmischer mit Rotationsmischflügel wurden vorgelegt: 80kg geblähte, offenporige Perlitpartikel mit einer Partikelgröße im Mittel <50µm. In diese Materialvorlage wurden 67kg demineralisiertes Wasser eingetragen und der Mischvorgang fortgesetzt, bis das Wasser vollständig von den Perlitpartikeln aufgenommen war. Über einen Pulverdosierer wurden 20kg SAP zugegeben und der Mischvorgang fortgesetzt bis ein homogener frei fließender Materialverbund resultierte mit der Zusammensetzung von etwa:

| | |
|---|---|
| Perlitpartikel | 48,00 Gewichtsprozent |
| Wasser | 40,00 Gewichtsprozent |
| SAP | 12,00 Gewichtsprozent |

Beim Mischvorgang stieg die Temperatur auf 35°C an. Trotz des Wassergehaltes von 40,00 Gewichtsprozent, der erfindungsgemäß vorzugsweise über 10,00 Gewichtsprozent im Materialverbund beträgt, im Materialverbund fühlte sich dieser sehr trocken an und kann in dieser Form ohne nachfolgende Trocknung als Fertigware abgepackt werden.

Der erfindungsgemäße Materialverbund nach Beispiel 2 kann beispielsweise eingesetzt werden als Bodenverfestigungsmittel, zur Untermischung unter Pflanzerde oder Pflanzsubstrate deren Wasserspeichervermögen erhöht werden muss. Die Zugabemengen bei diesen Anwendungen richten sich nach dem zu erzielenden Wasserbindevermögen. Es ist auch möglich, diesen Materialverbund direkt in trockene Böden einzuarbeiten. Der Materialverbund hat ein durchschnittliches Wasserbindevermögen von mehr als dem 20fachen seines Eigengewichtes und expandiert dabei unter Volumenvergrößerung bis auf das 25fache seines Ausgangsvolumens.

Beispiel 3: Der Materialverbund nach Beispiel 2 wurde in einem Vakuumtrockner und/oder Durchlauftrockner auf einen Restwassergehalt von unter 50,00 Gewichtsprozent getrocknet und dann unter Druckanwendung mittels Tabletten- und Pelletpressen zu Formkörpern ausgebildet.

Diese SAP-Formkörper eignen sich besonders zur Anwendung als Wasserspeicher, wenn dieser punktuell, beispielsweise zum Einbringen in Pflanzlöcher für Bäume oder Sträucher zum Einsatz kommen soll oder zur Verwendung als Wasserspeicher in bepflanzten Töpfen, beispielsweise bei Zimmerpflanzen.

Beispiel 4: Wird bei der Herstellung des erfindungsgemäßen Materialverbunds beim Mischvorgang nach Beispiel 2 der Wassergehalt auf mehr als 50,00 Gewichtsprozent erhöht, so bildet sich ein flockiges, poröses, weiches gelartiges Agglomerat aus. Die Partikelgröße wird durch den Anteil von Wasser im Materialverbund wesentlich beeinflusst.

In einem Rotationsmischer wurden bei diesem Prozess vorgelegt: 50kg geblähte, offenporige Perlitpartikel mit einer Partikelgröße im Mittel unter <50ym und 50kg demineralisiertes Wasser, danach wurden 50kg SAP eingetragen. Diesem homogenen, frei fließenden, pulvrigen Materialverbund wurden dann 140kg demineralisiertes Wasser zugesetzt und der Mischvorgang fortgesetzt bis sich eine Agglomeratbildung einstellte.

Die so hergestellten Agglomeratpartikel hatten eine Partikelgröße, die zwischen 3000-6000ym lagen und hatten eine gelartige, weiche Konsistenz sowie eine homogene aber poröse Materialstruktur. Die Zusammensetzung dieser Agglomeratpartikel ist in Gewichtsprozent gerundet:

| | |
|---|---|
| SAP | 17,25 Gewichtsprozent |
| Perlitpartikel | 17,25 Gewichtsprozent |
| Wasser | 65,50 Gewichtsprozent |

Diese Agglomeratpartikel können beispielsweise direkt oder in Abmischung mit anderen Substraten bei Hangbegrünungen und/oder Hangverfestigungen angewendet werden. Durch Trocknung der Agglomeratpartikel, in beispielsweise rotierenden Durchlauftrockner, bei einer Temperatur über 100°C resultieren homogene unregelmäßig geformte, poröse schüttfähige und druckstabile Superabsorbergranulate, die in der Lage sind, bis zum 40fachen ihres Eigengewichtes Wasser und/oder wässrige Flüssigkeiten aufzunehmen und wieder abzugeben. Mit der Aufnahme von Wasser und/oder wässrigen Flüssigkeiten ist eine Volumenvergrößerung verbunden.

Dieser Materialverbund, der als Agglomeratgranulat ausgeformt ist, kann beispielsweise allein oder in Abmischung mit anderen Materialien als Wasser bindende Drainage bei Dachbegrünungen zum Einsatz kommen. Die wasserhaltigen Agglomeratpartikel können auch beispielsweise leicht durch Schneckenpressen, mit vorgeschalteten Lochscheiben, zu definierten Granulatsträngen ausgeformt werden, die durch rotierende Messerscheiben auf die gewünschte Länge geschnitten und anschließend getrocknet werden.

Es hat sich als vorteilhaft erwiesen, dass bei der Verarbeitung über Schneckenpressen zur Verfestigung der Granulatstränge über geeignete Dosiervorrichtungen organische und/oder anorganische Bindemittel eingearbeitet werden, vorzugsweise auf der Basis Natronwasserglas und/oder Kaliwasserglas, aber auch der Zusatz von Ligninverbindungen und/oder Ligninderivaten ist vorteilhaft, wobei vorzugsweise Ligninsulfonat-Komplexe gebildet als Umsetzungsprodukt aus Calcium-Ligninsulfonaten mit Calciumoxid enthalten sind.

Durch den Zusatz von Bindemittel können zusätzlich die Festigkeiten der Materialverbunde und deren Gebrauchseigenschaften wesentlich beeinflusst werden.

Bei der Ausgestaltung der erfindungsgemäßen Aufgabe, ein Bodenverbesserungsmittel zu schaffen, mit Struktur gebenden und Wasser speichernden Eigenschaften, müssen vielfältige Faktoren und Anforderungen berücksichtigt werden. Dies wird durch den erfindungsgemäßen Grundverbund von SAP und geblähten, offenporigen Perlitpartikeln erreicht. Berücksichtigt werden muss grundsätzlich bei einer entsprechenden Produktausgestaltung für den Bereich der Bodenverbesserung und Langzeitwasserspeicher, dass solche Produkte beim Quellungsprozess groβe Mengen an Wasser aufnehmen und speichern müssen und trotzdem dieses Wasser wieder an die Pflanzen abgegeben bzw. von den Pflanzen aufgenommen werden kann.

Eine Verbesserung der Bodenkapillarität ist erwünscht, gleichzeitig sollte die Bodenqualität durch Beimischungen der Mineralstoffe positiv beeinflusst werden. Wünschenswert ist, dass ein entsprechendes Produkt bei Untermischung unter trockenen Erdboden und anschließender Beregnung, nicht nur das Wasser speichert sondern auch expandiert, so dass eine lockere, bepflanzbare Bodenstruktur entsteht, in die auch Saatgut eingebracht werden kann. Diese Gesamtproblematik ist bereits ausführlich in WO2003000621A1 beschrieben.

Es ist vorteilhaft, dass auch erfindungsgemäße Materialverbunde bzw. daraus ausgebildete oder hergestellte Formkörper an Ort und Stelle mit einfachsten Mittel verarbeitet und sofort in die zu bearbeitenden Flächen eingebracht werden können oder durch geeignete Mischeinrichtungen, beispielsweise unter Zugabe von Wasser, mit anderen Erd- und/oder Pflanzsubstraten zu einem homogenen Materialverbund vereinigt werden können, der dann erst in dieser Form in die beispielsweise zu bepflanzenden, trockenen Bodenstrukturen eingebracht wird. Dies wird durch nachstehendes Beispiel aufgezeigt:

Beispiel 5: In einem mobilen, rotierenden Zwangsmischer mit Austragsvorrichtung wurden vorgelegt: 10kg eines Bodensubstrates auf der Basis von CFP mit organischen Faseranteilen und einer Feuchte, also Wassergehalt, von 40,00 Gewichtsprozent. In diese Substratvorlage wurden 200kg des erfindungsgemäßen Materialverbundes untergemischt, der folgenden Zusammensetzung und in Pulverform, der mit einer Teilchengröße <1000ym vorlag:

| | |
|---|---|
| Perlitpartikeln: | 80,00 Gewichtsprozent |
| SAP | 20,00 Gewichtsprozent |

Nach der homogenen Untermischung dieses erfindungsgemäßen Materialverbundes wurden zusätzlich 1000kg Wasser untergemischt. Das so mit dem Superabsorber aufbereitete Boden- und Pflanzsubstrat wurde nun auf die wüstenähnliche Bodenfläche, also auf einen Sandboden mit einer Schichtdicke von cirka 5-8cm aufgebracht und mittels einer Egge in den Sandboden bis zu einer Tiefe von cirka 10cm eingearbeitet. Der Austrag pro Quadratmeter Fläche lag im Mittel bei ca. 1400kg bei einer behandelten Gesamtfläche von ca. 8000qm.

Nach der zusätzlichen Beregnung mit Wasser wurde festgestellt, dass die so behandelte Bodenfläche in der Lage war, insgesamt ca. 15000kg Wasser aufzunehmen und zu binden und dieses, in Abhängigkeit von den Windverhältnissen und der Außentemperatur, die im Mittel bei cirka 38°C über eine Zeit von 14 Stunden am Tag und in der Nacht bei ca. 30°C lag, zu speichern, so dass nach 4 Tagen noch eine Restfeuchte gemessen werden konnte, die bei ca. 30% der ursprünglichen Feuchte lag.

Hervorzuheben ist, dass es keine Bodenverklumpungen durch den erfindungsgemäßen Materialverbund gab, wie dies beim Einbringen von herkömmlichen Superabsorbern festzustellen ist. Die anwendungstechnischen Eigenschaften des erfindungsgemäßen Materialverbunds werden, wie bereits ausgeführt, wesentlich beeinflusst durch das Verhältnis der Anteile an geblähten Perlitpartikel und SAP im Materialverbund und können durch weitere Zuschlagstoffe entsprechend angepasst werden.

Eine Weiterbildung der Erfindung ist dadurch gegeben, dass dem erfindungsgemäßen Materialverbund bzw. dem daraus ausgebildeten oder hergestellten Formkörper natürliche Gesteinsmehle und/oder Gesteinsgranulate, vorzugsweise mikroporöse Gesteinsmehle und/oder Gesteinsgranulate oder unter Wasseraufnahme quellfähige Gesteinsmehle und/oder Gesteinsgranulate zugeführt werden, die einerseits zur Verbesserung der Bodenstruktur dienen und andererseits in der Lage sind, die Pflanzen mit den entsprechenden mineralischen Nährstoffen zu versorgen. Dies können beispielsweise sein gemahlenes nicht geblähtes Rohperlit, Gesteinsmehle aus Lavagestein, sowie Trass, Dolomit, Bentonit, Magnesit und Feldspat. Bevorzugt ist ein natürliches, gemahlenes Mineralgestein, wie beispielsweise Eruptivgestein, vorzugsweise Lavagestein und Sedimentgesteine wie Trass, Dolomit, Magnesit, Bentonit und Feldspat enthalten, vorzugsweise mit einer Korngröße <200 µm, wobei besonders bevorzugt 1-95 Gew.-% Coir Fibre Pith enthalten sind.

Der Zusatz von nicht geblähtem Perlitpulver erfolgt vorzugsweise als sehr preiswerter beschwerender Füllstoff zur Erreichung von höheren spezifischen Gewichten bei den erfindungsgemäßen Materialverbunden.

Besonders vorteilhaft ist der Zusatz von feinst gemahlenem Lavagestein, denn dadurch werden den Pflanzen für das Wachstum erforderliche natürliche Mineralstoffe zugeführt, was bisher durch die bekannten Verfahren und Produkte, die neben den Superabsorberpolymere Lavagestein und/oder Lavagesteinsmehl, das bei der Polymerisation der SAP zugegeben wird, nicht möglich war.

Diese erfindungsgemäßen Materialverbunde sind außerdem bestens geeignet zur Aufnahme und Bindung und/oder Behandlung von schadstoffhaltigen und/oder geruchsintensiven Flüssigkeiten und Suspensionen, wie beispielsweise Gülle, Schmutzwasser und Abwasserschlamm.

Aufgrund der Materialstruktur und Eigenschaften der geblähten Perlitpartikel in der erfindungsgemäßen Kombination mit SAP ist es in weiterbildenden Ausführungen der Erfindung möglich, dass Öl und/oder Schadstoff abbauende Mikroorganismen und/oder das Pflanzenwachstum fördernde Mikroorganismen und/oder tierische Schädlinge abwehrende und vernichtende Mikroorganismen und/oder deren Stoffwechselprodukte in die Poren der geblähten Perlitpartikel eingelagert und/oder an diese gebunden werden.

Dies gilt auch für die Einlagerung von anorganischen und/oder organischen Düngemittel und/oder Pflanzenschutzmittel und/oder anderen funktionellen Wirk- und Zuschlagstoffen. Vorzugsweise sollten diese Mittel durch Wassereinwirkung aktivierbar und/oder in Wasser löslich sein.

Auch die Einarbeitung von Herbiziden, Fungiziden, Insektiziden, Pestiziden und Bakteriziden in den erfindungsgemäßen Materialverbund bzw. den daraus ausgebildeten oder hergestellten Formkörper sind weitere vorteilhafte Weiterbildungen der Erfindung.

Eine weitere bevorzugte Ausbildung der Erfindung ist die Einarbeitung von Cellulosefaser, Mikrocellulose, Altpapierfaser, Holzspäne, Sägemehl, Holzwolle, Heu, Stroh, Kokosfaser und Kokosschalenmehl, also generell die Einarbeitung von organischen Zuschlagstoffen und/oder Füllstoffen vorzugsweise pflanzlicher Herkunft, in den Materialverbund. Dadurch ist es beispielsweise möglich, flächige, Karton ähnliche Gebilde und Matten auszubilden, die beispielsweise als wasserspeichernde Matten und/oder Saatgutträger dienen können oder, auch in Verbindung mit anderen flächigen Trägermaterialien, zur Kultivierung von Pflanzen in Feuchtgebieten und/oder überfluteten Bodenflächen.

Des Weiteren können diese erfindungsgemäßen Weiterbildungen der Materialverbunde und/oder Formkörper Verwendung finden als Ölbindemittel und/oder Bindemittel für Wasser-Ölemulsionen, insbesondere in der Form von Pellets.

Es ist bekannt, dass geblähte Perlitgranulate, auch geblähte Perlitpartikel, in der Lage sind, Gerüche zu absorbieren.

Eine weitere vorteilhafte Weiterbildung der Erfindung beinhaltet, dass in den erfindungsgemäßen Materialverbund und/oder Formkörper natürliche oder synthetische Duftstoffe und/oder Duftstoffzubereitungen, vorzugsweise auf der Basis ätherischer Öle, eingearbeitet werden. Solche Produkte finden Anwendung als Flüssigkeiten speichernde und Gerüche neutralisierende Materialien bei der Bekämpfung von üblen Gerüchen und austretenden übel riechenden Flüssigkeiten, wie diese beispielsweise in Biotonnen anfallen.

Diese erfindungsgemäßen Produkte können auch zur Geruchsabsorbierung bei der Flächenabdeckung von Mülldeponien zum Einsatz kommen oder bei der Verarbeitung von Abwasserschlamm.

Es wurde auch herausgefunden, dass die Wirkung des erfindungsgemäßen Materialverbunds, das Gerüche absorbieren sollen, dadurch erreicht wird, dass Aktivkohle, vorzugsweise hochporöse Aktivkohle aus Kokosschalen gewonnen, zugesetzt ist, vorzugsweise in Korngrößen <1000ym.

In einer weiteren bevorzugten Ausführungsform des Materialverbunds enthält dieser zwischen 1-95 Gewichtsprozent CFP, da sich die erfindungsgemäßen SAP in und/oder an die Partikel von CFP einlagern und/oder an diese binden lassen. Besonders vorteilhaft ist dies, wenn zusätzliche Füll- und/oder Wirkstoffe an den CFP gebunden und/oder eingebracht werden müssen. Dies wird erreicht durch Zusatz von CFP bei der Herstellung der erfindungsgemäßen Materialverbunde und/oder durch Zugabe dieser Materialverbunde und/oder Formkörper zu CFP.

Eine weitere vorteilhafte Ausbildung der Erfindung wird dadurch erreicht, dass dem erfindungsgemäßen Materialverbund offenporiges, geblähtes Perlit in ungebrochener Form, vorzugsweise in kugelähnlicher Perlform, zugesetzt wird und die Partikelgröße vorzugsweise eine Größenverteilung zwischen 200-1000ym ausweist. Dieser Zusatz bringt bei der Applikation, in beispielsweise schwere und sandige Böden, eine zusätzliche Durchlüftung und Lockerung der Bodenstruktur und verbessert das Wasserspeichervermögen.

Es kann für spezielle Anwendungsbereiche der erfindungsgemäβen Materialverbunde, insbesondere dann, wenn die Bodenstruktur gelockert und belüftet werden soll, vorteilhaft sein, dass geblähtes und ungebrochenes Perlit in Perlform zugesetzt wird und dieses bei der Herstellung des Materialverbunds durch Druckeinwirkung zu offenporigen Perlitpartikel gebrochen wird, deren Partikelgröße vorzugsweise <500ym liegt.

Es wurde herausgefunden, dass eine weitere, vorteilhafte Ausbildung der Erfindung dadurch erreicht wird, dass der Materialverbund als wässrige Suspension ausgebildet ist, die mittels geeigneter Auftragsvorrichtungen und/oder Sprüh- und Spritzaggregaten appliziert werden kann. Dadurch ist es beispielsweise möglich, einfach und unproblematisch Staubbindungen auf Wegen und Plätzen durchzuführen und auch Befestigungen von sandigen Hängen und Böschungen optimiert, wenn diese Suspensionen beispielsweise zusätzlich pflanzliche Kurzfasern, wie zum Beispiel CFP oder Cellulosefasern, enthalten.

Der erfindungsgemäße Materialverbund beschränkt sich in seiner Ausführung, Herstellung und Verwendung nicht auf die vorstehend angegebenen bevorzugten Ausführungsbeispiele. Vielmehr sind eine Vielzahl von Ausgestaltungsvariationen, Herstellungs- und Verwendungsmöglichkeiten denkbar, welche von der dargestellten Lösung auch bei grundsätzlich anders gearteter Ausführung Gebrauch machen.

## Patentansprüche

1. Materialverbund, insbesondere als Formkörper ausgebildeter und/oder zur Herstellung von Formkörpern geeigneter Materialverbund, bestehend aus Polymermaterialien und einer porösen mineralischen Matrix, der durch Einwirkung von Flüssigkeiten, insbesondere durch wässrige Flüssigkeiten und/oder wässrige Ölemulsionen expandiert und diese Flüssigkeiten speichert,
**dadurch gekennzeichnet,**
**dass** gebrochenes und/oder gemahlenes, offenporiges, geblähtes, expandiertes Perlit in Form von scharfkantigen, porösen Perlitpartikeln und mindestens ein Hydrogel bildendes natürliches und/oder synthetisches, vernetztes und/oder teilvernetztes Polymer und/oder Copolymer enthalten ist, wobei mindestens ein Polymer und/oder Copolymer durch Wasseraufnahme teilweise, vorzugsweise zu 10-60% bezogen auf das eingebrachte Polymergewicht und/oder Polymervolumen, als Hydrogel ausgebildet ist und/oder vollständig in Hydrogelform vorliegt.

2. Materialverbund nach den Ansprüchen 1 und 2,
**dadurch gekennzeichnet,**
**dass** die teilweise und/oder vollständige Hydrogelform der SAP nach Ausbildung des Materialverbundes durch Wasserentzug vollständig und/oder teilweise aufgehoben ist und der Anteil an Wasser, das als Hydrogel und/oder im Materialverbund Hydroggel-Komposit enthalten ist, unter 15 Gew.-% des Gesamtgewichtes der enthaltenen SAP-Anteile liegt.

3. Materialverbund nach einem oder mehreren der vorangegangenen Ansprüche,
**dadurch gekennzeichnet,**
**dass** 0,5-95 Gew.-% Perlitpartikel enthalten sind, vorzugsweise mit einer Partikelgröße <100 µm.

4. Materialverbund nach einem oder mehreren der vorangegangenen Ansprüche,
**dadurch gekennzeichnet,**
**dass** mindestens ein natürliches, gemahlenes Mineralgestein, wie beispielsweise Eruptivgestein, vorzugsweise Lavagestein und Sedimentgesteine wie Trass, Dolomit, Magnesit, Bentonit und Feldspat enthalten ist, vorzugsweise mit einer Korngröße <200 µm.

5. Materialverbund nach einem oder mehreren der vorangegangenen Ansprüche,
**dadurch gekennzeichnet,**
**dass** 1-95 Gew.-% Coir Fibre Pith enthalten sind.

6. Materialverbund nach einem oder mehreren der vorangegangenen Ansprüche,
**dadurch gekennzeichnet,**
**dass** offenporiges, geblähtes Perlit in ungebrochener Form, vorzugsweise in kugelähnlicher Perlform, in einer Partikelgröße von 100 bis 1000µm enthalten und/oder untergemischt ist, vorzugsweise in einer Größenverteilung zwischen 200-1000µm.

7. Materialverbund nach einem oder mehreren der vorangegangenen Ansprüche,
dadurch gekenntzeichnet,
dass der Gesamtwassergehalt >10 Gew.-% beträgt.

8. Materialverbund nach einem oder mehreren der vorangegangenen Ansprüche,
**dadurch gekennzeichnet,**
**dass** Ligninverbindungen und/oder Ligninderivate, vorzugsweise Ligninsulfonat-Komplexe gebildet als Umsetzungsprodukt aus Calcium-Ligninsulfonaten mit Calciumoxid enthalten sind.

9. Materialverbund nach einem oder mehreren der vorangegangenen Ansprüche,
**dadurch gekennzeichnet,**
**dass** hochporöse Aktivkohle aus Kokosschalen gewonnen, enthalten ist, vorzugsweise in Korngrößen <1000 µm.

10. Materialverbund nach einem oder mehreren der vorangegangenen Ansprüche,
**dadurch gekennzeichnet,**
**dass** er als stabile wässrige Suspension ausgebildet ist.

11. Verfahren zur Herstellung eines Materialverbunds nach einem oder mehreren der vorangegangenen Ansprüche,
**dadurch gekennzeichnet,**
**dass** zur Bildung und/oder zum Verbinden einzelner Bestandteile des Materialverbunds mindestens ein enthaltenes Hydrogel bildendes Polymer und/oder Copolymer durch Zugabe von Wasser beim Misch- und/oder Formgebungsvorgang als Bindemittel unter Hydrogelbildung aktiviert wird.

12. Verfahren zur Herstellung eines Materialverbunds nach einem oder mehreren der vorangegangenen Ansprüche,
**dadurch gekennzeichnet,**
**dass** geblähtes, ungebrochenes Perlit in kugelähnlicher Perlform bei der Herstellung der Hydrogel-Komposite durch Druckeinwirkung
und/oder anderen mechanischen Einwirklungen zu offenporigen, scharfkantigen Perlitpartikeln gebrochen und/oder zerkleinert wird, vorzugsweise auf eine Partikelgröße <500 µm.

13. Verwendung eines Materialverbunds nach einem oder mehreren der vorangegangenen Ansprüche als Wasserspeicher und Nährstofflieferant für das Wachstum, die Keimung und Kultivierung von Pflanzen aller Art, wobei der Materialverbund entweder direkt dem Erdboden oder als Zusatzstoff in Abmischung mit dem Erdboden und/oder Kultursubstraten zur Verbesserung der Bodenstruktur, des Bodenklimas und des Wasserhaushaltes, zugeführt wird.

14. Verwendung eines Materialverbunds nach einem oder mehreren der vorangegangenen Ansprüche zur Aufnahme, Bindung und/oder Behandlung von schadstoffhaltigen und/oder geruchsintensiven Flüssigkeiten und/oder Suspensionen, wie beispielsweise Gülle, Schmutzwasser und Abwasserschlamm.

## Claims

1. The present invention relates to a composite material, particularly a composite material designed as a molded body and/or suited for the production of molded bodies, composed of polymer materials and a porous mineral matrix, said composite material expanding under the action of liquids, particularly aqueous liquids and/or aqueous oil emulsions, and storing said liquids,
**characterized in that**
the matrix it comprises includes crushed and/or ground, open-pored, expanded/expanded perlite in the form of sharp-edged perlite particles and at least one natural and/or synthetic cross-linked and/or partially cross-linked polymer and/or polymer forming a hydrogel.

2. A composite material as in claims 1 and 2,
**characterized in that**
the partial and/or complete hydrogel form of the super absorbent polymer (SAP) after formation of the composite material is completely and/or partially dissolved by the extraction of water, which is comprised as a hydrogel and/or inn the composite material hydrogel-compositeand makes up less than 15 weight percent of the total weight of the contained SAP parts.

3. A composite material as in claims 1 and 2,
**characterized in that**
it comprises 0.5 - 95 weight percent of perlite particles, preferably with a perlite particle size of < 100 µm.

4. A composite material as in one or several of the previous claims, **characterized in that**
at least one natural ground eruptive mineral, such as eruptive rock, preferably lava, and sedimentary rock such as trass, dolomite, bentonite and feldspar is contained, preferably with a grain size < 200 µm.

5. A composite material as in one or several of the previous claims, **characterized in that**
it contains 1 - 95 weight percent coir fibre pith.

6. A composite material as in one or several of the previous claims, **characterized in that**
it contains and/or has added an open-porous expanded perlite, preferably with spherical pearl shape, in a grain size of 100 to 1000 µm, preferable in a grain size range of 200 - 1000 µm.

7. A composite material as in one or several of the previous claims, **characterized in that**
it contains a total water volume > 10 weight percent.

8. A composite material as in one or several of the previous claims, **characterized in that**
it contains lignin cmpounds and/or lignin derivates, referably lignin sulfonate complexes which are formed as a conversion product of calcium lignin sulfonates and calcium oxide.

9. A composite material as in one or several of the previous claims, **characterized in that**
it contains highly porous active carbon gained from coconut pith, preferably in the grain size range < 1000 µm.

10. A composite material as in one or several of the previous claims, **characterized in that**
it is formed as a stable aqueous suspension.

11. A method for the production of a composite material as in one or several of the pprevious claims,
**characterized in that**
for the hydrogel formation and/or connecting of individual components of the composite material at least one hydrogel-forming polymer and/or copolymer are activated as a binding agent by adding water during the mixing or molding process.

12. A method for the production of a composite material as in one or several of the previous claims,
**characterized in that**
expanded, unbroken perlite in spherical pearl-like shape is, in the process of producing the hydrogel composite, crushed by pressure and/or other mechanical effects to create open-pored, sharp-edged perlite particles with a grain size of < 500 µm.

13. Use and application of the composite material as in one or several of the previous claims as a water storage and nutrient supply for the growth, germination and cultivation of plants of all sorts, whereby the composite material is added directly to the soil and/or as an additive in a mixture to the soil and/or culture substrates with the pprupose of improving the soil structure, the soil climate and the water balance.

14. Use and application of the composite material as in one or several of the previous claims for the purpose of binding, absorption and/or treatment of contaminated and/or smell-intensive liquids and/or suspensions, such as for example liquid manure, waste water and waste water sludge.

## Revendications

1. Matériau composite, en particulier un matériau composite réalisé sous forme d'un corps moulé et/ou approprié pour la fabrication de corps moulés, composé de matières polymères et d'une matrice minérale poreuse, qui, s'expanse sous l'effet de liquides, en particulier de liquides aqueux et/ou des émulsions d'huile dans de l'eau et stocke ces liquides,
**caractérisé par le fait,**
**que** de la perlite fragmentée et/ou moulue, à pores ouverts, gonflée/expansée, sous la forme de particules de perlite poreuses à bords vifs, et au moins un polymère et/ou copolymère formant un hydrogel, naturel et/ou synthétique, réticulé et/ou partiellement réticulé, avec au moins un polymère et/ou un copolymère, formé à travers l'absorption d'eau, de préférence de 10-60% par rapport au poids de polymère apporté et/ou du volume de polymère, forme un hydrogel et/ou soit présent sous forme d'hydrogel complet.

2. Matériau composite selon les revendications 1 et 2,
**caractérisé par le fait,**
**que** la forme d'hydrogel partielle et/ou complète de la SAP, après développement du matériau composite par déshydratation soit complètement et/ou partiellement relevée et que la part en eau, qui est contenue en tant que hydrogel et/ou dans le matériau composite de composite d'hydrogel, se situe en dessous de 15% de poids du poids total des parts de SAP contenues.

3. Matériau composite d'après une ou plusieurs des revendications précédentes,
**caractérisé par le fait,**
**que** 0,5 - 95 % du poids soient les particules de perlite, de préférence avec une taille de particules <100 µm.

4. Matériau composite d'après une ou plusieurs des revendications précédentes,
**caractérisé par le fait,**
**qu'**au moins une roche minérale naturelle, moulue, comme par exemple de la roche éruptive, contienne de préférence de la lave volcanique et des roches sédimentaires comme du trass, de la dolomite, de la magnésite, du bentonite et du feldpath, de préférence avec une dimension de grain <200 µm.

5. Matériau composite d'après une ou plusieurs des revendications précédentes,
**caractérisé par le fait,**
**que** 1 - 95 % de poids contienne du Coir Fibre Pith

6. Matériau composite d'après une ou plusieurs des revendications précédentes,
**caractérisé par le fait,**
**que** de la perlite à pores ouverts, gonflée, sous forme non-fragmentée, de préférence sous forme de perles sphériques, dans une taille de particules de 100 à 1000 µm, contenue ou mélangée, de préférence dans une distribution de tailles entre 200 et 1000 µm.

7. Matériau composite d'après une ou plusieurs des revendications précédentes,
**caractérisé par le fait,**
**que** le contenu total de l'eau soit >10 % du poids.

8. Matériau composite d'après une ou plusieurs des revendications précédentes,
**caractérisé par le fait,**
**que** des liaisons de lignine et/ou des dérivés de lignine, de préférence des complexes de lignosulfonate, formées en tant que produit de réaction de sulfonate de lignine de calcium avec de l'oxyde de calcium, soient contenues.

9. Matériau composite d'après une ou plusieurs des revendications précédentes,
**caractérisé par le fait,**
**que** du charbon actif hautement poreux, gagné à partir d'écorce de noix de coco, soit contenu, de préférence dans des dimensions de grains <1000 µm.

10. Matériau composite d'après une ou plusieurs des revendications précédentes,
**caractérisé par le fait,**
**qu'**il est formé en tant que suspension aqueuse stable.

11. Procédés pour la fabrication d'un matériau composite d'après un ou plusieurs des revendications précédentes,
**caractérisé par le fait,**
**que**, pour la formation et/ou la relation de certains composants du matériau composite, au moins un hydrogel contenu formant un polymère et/ou un copolymère par l'ajout d'eau au cours du procédé de mélange et/ou de façonnement soit activé en tant que liant sous la formation d'hydrogel.

12. Procédés pour la fabrication d'un matériau composite d'après un ou plusieurs des revendications précédentes,
**caractérisé par le fait,**
**que** de la perlite, gonflée, non-fragmentée en forme sphérique, lors de la fabrication du composite d'hydrogel, par l'effet de pression et/ou d'autres effets mécaniques, soit fragmenté et/ou réduits en des particules de perlite à bords vifs et à pores ouverts, de préférence à une dimension de particule <500 µm.

13. Utilisation d'un matériau composite d'après une ou plusieurs des revendications précédentes en tant qu'emmagasinement d'eau en source nutritionnelle pour la croissance, la germination et la culture de plantes de toutes sortes, alors que le matériau composite est ou bien directement ajouté à la terre ou bien ajouté à la terre et/ou au milieu de culture en tant qu'additif mélangé à la fin de l'amélioration de la structure du sol, du climat du sol et du régime des eaux.

14. Utilisation d'un matériau composite d'après une ou plusieurs des revendications précédentes pour la réception, la liaison et/ou le traitement de liquides nauséabonds et/ou contenant des polluants et/ou des suspensions, comme par exemple du lisier, d'eaux usées et de boues d'épuration.
